# NEUE EUROPÄISCHE PATENTSCHRIFT

(11) **EP 0 273 901 B2**
(45) Veröffentlichungstag und Bekanntmachung des Hinweises auf die Entscheidung über den Einspruch: **13.04.1994**
(45) Hinweis auf die Patenterteilung: 30.01.1991
(21) Anmeldenummer: 87890258.4
(22) Anmeldetag: 18.11.1987
(51) Int. Cl.: B23K 11/00

(54) **Vorrichtung zum Zuführen der Querdrähte zur Schweisslinie einer Gitterschweissmaschine**
Device for feeding the transvers wires to the welding line of a wire mesh welding machine
Dispositif pour amener les fils d'acier transversaux dans la ligne de soudage d'une machine pour souder des treillis

(30) Priorität: 28.11.1986 AT 3182/86
(43) Veröffentlichungstag der Anmeldung: 06.07.1988
(73) Patentinhaber: EVG Entwicklungs- u. Verwertungs- Gesellschaft m.b.H., A-8074 Raaba (AT)
(72) Erfinder: Ritter, Klaus, Dipl.-Ing., A-8042 Graz (AT); Ritter, Gerhard, Dipl.-Ing.Dr., A-8043 Graz (AT); Scherr, Rudolf, Dipl.-Ing., A-8045 Graz (AT)
(74) Vertreter: Holzer, Walter, Dipl.-Ing.

(56) Entgegenhaltungen:
- AT-B- 267 293
- AT-B- 280 019
- CH-A- 383 305
- DE-A- 2 622 167
- DE-A- 3 517 047
- US-A- 4 174 475

## Beschreibung

Die Erfindung betrifft eine Vorrichtung zum Zuführen der Querdrähte zu der zwischen Reihen gegeneinander anstellbarer Schweißelektroden liegenden Schweißlinie einer nach der elektrischen Widerstandsmethode arbeitenden Gitterschweißmaschine, bei welcher die Querdrähte zuerst in eine mit Abstand von der Schweißlinie angeordnete Zuführposition gebracht und dann den Schweißelektroden zugeführt werden, in deren Bereich Einrichtungen zum Auffangen und Festhalten der zugeführten Querdrähte auf der Schweißlinie zwischen den Schweißelektroden vorgesehen sind.

Bei Vorrichtungen dieser Gattung wird die Zuführposition nahe der Schweißlinie so gewählt, daß das Querdrahtmaterial jeweils während der Durchführung einer Schweißung möglichst günstig von einem Vorrat angeliefert und nach Beendigung der Schweißung und Vorschieben der im Entstehen begriffenen Gitterbahn um einen Schritt möglichst günstig aus der Zuführposition zur Schweißlinie weiter befördert werden kann. Es können die Querdrähte beispielsweise von einer Maschinenseite her in die Zuführposition eingeschossen werden (vgl. z.B. CH-B-383 305) oder von oben her einzeln aus einem Magazin in die Zuführposition gestoßen werden (vgl. z.B. US-B-4 174 475). Die Weiterbeförderung aus der Zuführposition zur Schweißlinie kann beispielsweise mittels genuteter rotierender Transportscheiben (vgl. z.B. CH-B-383 505), mittels im wesentlichen translatorisch bewegter Transportschienen (vgl. z.B. AT-B-267 293), mittels einer Kolben-Zylinder-Einheit (vgl. z.B. US-B-174 475) usw. erfolgen. Solche Zuführ-Vorrichtungen können oberhalb und/oder unterhalb der durch den Vorschubweg der Längsdrahtschar definierten Gitterherstellungsebene angeordnet werden, wobei im Falle der Anordnung von Zuführ-Vorrichtungen sowohl oberhalb als auch unterhalb der Gitterherstellungsebene die beiden Zuführpositionen gegebenenfalls mit Hilfe einer gemeinsamen Einschießvorrichtung und einer im Einschußweg angeordneten "Weiche" abwechselnd mit Querdraht beschickt werden können (vgl. AT-B-280 019).

Diese bekannten Übertragungsmittel, mit deren Hilfe die Querdrähte aus der Zuführposition zur Schweißlinie gefördert werden, setzen einen zusätzlichen, in den Bereich der Schweißelektroden eingreifenden Mechanismus voraus und bilden damit eine potentielle Störungsquelle. Darüber hinaus beeinträchtigen sie aber auch die Möglichkeit, die Maschine auf die Herstellung von Gittern mit verschiedenen Längsdrahtabständen umstellen zu können. Sollen nämlich die Elektrodenabstände geändert werden, um ein Gitter mit geändertem Längsdrahtabstand erzeugen zu können, so müssen gleichzeitig auch die Abstände der Übertragungsmittel für die Querdrähte geändert werden, wodurch sich der für die Umstellung der Maschine erforderliche Zeitaufwand ganz beträchtlich erhöht.

Die Erfindung dient der Lösung der Aufgabe, eine Querdraht-Zuführvorrichtung der einleitend angegebenen Gattung derart auszubilden, daß keine mechanischen Übertragungsmittel zum Fördern der Querdrähte aus einer im Abstand von der Schweißlinie vorgesehenen Zuführposition zur Schweißlinie erforderlich sind.

Diese Aufgabe wird gemäß der Erfindung dadurch gelöst, daß in der Zuführposition zumindest eine im Schweißtakt mit Preßluft beaufschlagbare, auf die Schweißlinie gerichtete Düse zum ausschließlich durch Preßluft veranlaßten Fördern der Querdrähte aus der Zuführposition zur Schweißlinie angeordnet ist und daß im Anschluß an diese Düse in Richtung zur Schweißlinie verlaufende, mit Abstand vor dem Bereich der Schweißelektroden endende, die Querdrahtzuführbahn beidseits begrenzende parallele Führungen vorgesehen sind.

Infolge des Ersatzes der mechanischen Übertragungsmittel durch einen Blasstrahl wird die Gefahr von Betriebsstörungen vermindert und überdies wird die Umstellung der Schweißmaschine auf verschiedene Längsdrahtabstände erleichtert. Es hat sich gezeigt, daß diese Art der Förderung der Querdrähte sowohl bei dicken als auch bei dünnen Querdrähten, die nur einen relativ kleinen Teil der Düsenöffnungen abdecken, überraschend gut funktioniert, offenbar weil die erforderliche Förderkraft bei dünnen Drähten um so viel kleiner ist als bei dicken, daß die Zunahme der Leckluftmenge nicht stört.

Im Rahmen der Erfindung kann eine lange Schlitzdüse oder eine Reihe von in Abständen angeordneten schmäleren Düsen zur Querdrahtförderung verwendet werden. Zum Auffangen und Festhalten der von einem Preßluftimpuls geförderten Querdrähte werden vorteilhaft Dauermagnete oder im Schweißtakt erregbare Elektromagnete verwendet, welche den zusätzlichen Vorteil bieten, daß ihre Anziehungskraft die Einhaltung der richtigen Bewegungsrichtung der Querdrähte unterstützt und daher eine Verkürzung der an die Düse bzw. Düsen anschließenden Führungen ermöglicht.

Anhand der Zeichnung wird nun ein Ausführungsbeispiel der Erfindung näher beschrieben. Es zeigen:
Fig. 1 eine Seitenansicht einer Vorrichtung nach der Erfindung;
Fig. 2 eine Draufsicht auf eine mit Preßluft anspeisbare Düse, teilweise im Schnitt, und
Fig. 3 eine Draufsicht auf die Düsenanordnung in kleinerem Maßstab.

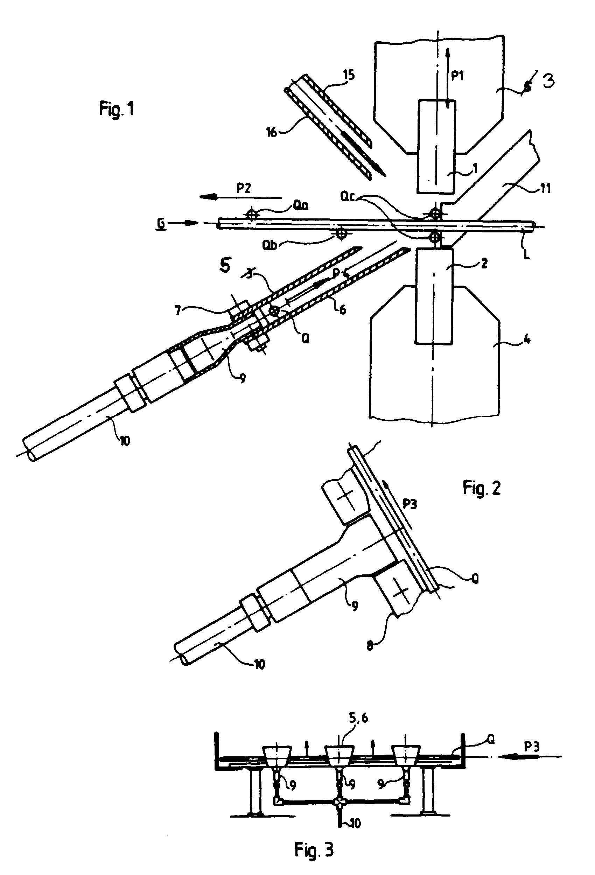

In Fig. 1 erkennt man, schematisch dargestellt, an Elektrodenträgern 3, 4 befestigte Schweißelektroden 1, 2, wobei die obere Elektrode 1 mittels ihres Trägers 3 gegen die feststehende untere Elektrode 2 im Sinne des Doppelpfeiles P1 bewegbar ist. Das herzustellende Gitter G, das aus einander rechtwinkelig kreuzenden Längsdrähten L und Querdrähten Q bestehen soll, wird durch bekannte Mittel schrittweise in Richtung des pfeiles P2 durch die Maschine gefördert.

Die Anordnung der Querdrähte innerhalb des Gitters kann beim dargestellten Ausführungsbeispiel variiert werden. Es können etwa nur Querdrähte Qa oberhalb der Längsdrähte L oder nur Querdrähte Qb unterhalb der Längsdrähte Lange ordnet werden, ferner können, wie in Fig. 1 gezeigt, entlang der Längsdrahtschar abwechselnd Querdrähte Qa und Qb angeordnet werden. Schließlich wäre es auch möglich, wie dies zwischen den Schweißelektroden 1, 2 angedeutet ist, je einen Querdraht Qc in gleicher, normal zu den Gitterlängsdrähten L stehenden Ebene oberhalb und unterhalb der Längsdrähte L anzuordnen und anzuschweißen, etwa dann, wenn ein hohes Widerstandsmoment des Gitters bezüglich der durch die Längsdrahtachsen definierten Ebene erwünscht ist.

Die Querdrähte Q können, wie aus Fig. 2 zu ersehen ist, von der Seite her in Richtung des Pfeiles P3 in eine Zuführposition zwischen parallelen Führungsblechen 5, 6 eingeschossen werden. Die Führungsbleche 5, 6 verlaufen in Ebenen, die mit der Ebene der Schweißelektroden 1, 2 einen spitzen Winkel einschließen; sie sind mit Bolzen und Muttern 7 an in Abständen angeordneten Tragkörpern 8 befestigt. In die Zwischenräume zwischen den Tragkörpern 8 sind die Auslaßöffnungen von Düsen 9 eingepaßt, die über Leitungen 10 mit Preßluft aus einem nicht dargestellten Kompressor beaufschlagt werden können. Zu diesem Zweck sind in die Leitungen 10 nicht dargestellte elektro-pneumatische Ventile bekannter Bauweise eingefügt, welche - von der Steuereinrichtung der Schweißmaschine gesteuert - im Schweißtakt die Beaufschlagung der Düsen 9 mit Preßluft ermöglichen.

Wie Fig. 3 zeigt, brauchen sich die Führungsbleche 5, 6 in Querrichtung nur über kurze Strecken beidseits ihrer zugeordneten Düse 9 zu erstrekken, sie können sich aber auch durchgehend von Düse zu Düse über die gesamte Maschinenbreite erstrecken.

Bei Beaufschlagung der Düsen 9 mit Preßluft wird beispielsweise ein vorher durch eine Schere in bekannter Weise von einem zulaufenden Querdrahtstrang großer Länge abgelängter Querdraht Q in Richtung des Pfeiles P4 in Fig. 1 zur Schweißlinie zwischen den Elektroden 1, 2 gefördert, wo seine Bewegung durch Anschläge bildende Auffangund Festhalteeinrichtungen 11 gestoppt wird. Die Einrichtungen 11 können mit ausgewählten, über die Maschinenbreite verteilten Elektrodenträgern 3 der Elektroden 1 verbunden sein, so daß im Falle einer Umstellung der Maschine von einer Längsdrahtteilung auf eine andere eine gesonderte Einstellung dieser Einrichtungen entfällt. Da in jedem Fall jedoch nur eine sehr geringe Zahl derartiger Einrichtungen erforderlich ist, könnten sie aber auch als selbständig an der Maschine montierte Einheiten ausgebildet sein.

Die Einrichtungen 11 können durch im Schweißtakt gesteuerte Haltefinger gebildet sein. Vorzugsweise sind sie jedoch als Dauermagnete oder als im Schweißtakt der Maschine erregbare Elektromagnete ausgebildet, um ein Zurückprallen der Querdrähte Q zu verhindern und bei der Führung der Querdrähte mitzuwirken.

Bei Anordnung einer zweiten Zuführeinrichtung oberhalb der Vorschubbahn der Längsdrähte L, die in Fig. 1 nur durch die Führungen 15, 16 angedeutet ist, können beide Zuführeinrichtungen gleich konstruiert sein und mit seitlich, gegebenenfalls abwechselnd über eine "Weiche" zugeführten Querdrähten versorgt werden. Es wäre aber auch möglich, eine Zuführeinrichtung, vorzugsweise die obere, an der Austrittsöffnung eines mit einem größeren Vorrat abgelängter, geradegerichteter Querdrähte beschickten Magazins anzuordnen und die Querdrähte mittels Preßluft von der Magazinaustrittsöffnung zur Schweißlinie zu fördern.

## Patentansprüche

1. Vorrichtung zum Zuführen der Querdrähte (Q) zu der zwischen Reihen gegeneinander anstellbarer Schweißelektroden (12) liegenden Schweißlinie einer nach der elektrischen Widerstandsmethode arbeitenden Gitterschweißmaschine, bei welcher die Querdrähte (Q) zuerst in eine mit Abstand von der Schweißlinie angeordnete Zuführposition gebracht und dann den Schweißelektroden (1,2) zugeführt werden, in deren Bereich Einrichtungen (11) zum Auffangen und Festhalten der zugeführten Querdrähte (Q) auf der Schweißlinie zwischen den Schweißelektroden (1, 2) vorgesehen sind, dadurch gekennzeichnet, daß in dieser Zuführposition zumindest eine im Schweißtakt mit Preßluft beaufschlagbare, auf die Schweißlinie gerichtete Düse (9) zum ausschließlich durch Preßluft veraulaßten Fördern der Querdrähte (4) aus der Zuführposition zur Schweißlinie angeordnet ist und daß im Anschluß an diese Düse (9) in Richtung zur Schweißlinie verlaufende, mit Abstand vor dem Bereich der Schweißelektroden (1, 2) endende, die Querdrahtzuführbahn beidseits begrenzende parallele Führungen (5, 6; 15, 16) vorgesehen sind.

2. Vorrichtung nach Anspruch 1, dadurch gekennzeichnet, daß zum Fördern der Querdrähte (Q) eine sich zumindest über einen wesentlichen Teil der Schweißmaschinenbreite erstreckende Schlitzdüse oder eine Reihe von in Abständen angeordneten Düsen (9) vorgesehen ist.

3. Vorrichtung nach Anspruch 1 oder 2, dadurch gekennzeichnet, daß die Führungen (5, 6; 15, 16) in zur Ebene der Schweißelektrodenreihen in spitzem Winkel geneigten Ebenen angeordnet sind.

4. Vorrichtung nach einem der Ansprüche 1 bis 3, dadurch gekennzeichnet, daß auf beiden Seiten der Gitterherstellungsebene Düsen (9) zum Fördern von Querdrähten (Q) und Querdraht-Führungen (5, 6; 15, 16) vorgesehen sind.

5. Vorrichtung nach einem der Ansprüche 1 bis 4, dadurch gekennzeichnet, daß die Einrichtungen (11) zum Auffangen und Festhalten der Querdrähte (Q) als Dauermagnete oder als im Schweißtakt erregbare Elektromagnete ausgebildet sind.

6. Einrichtung nach einem der Ansprüche 1 bis 5, dadurch gekennzeichnet, daß die Einrichtungen (11) zum Auffangen und Festhalten der Querdrähte (Q) an über die Maschinenbreite verteilten Trägern (3, 4) für die Elektroden (1, 2) befestigt sind.

## Claims

1. Apparatus for the feeding of transverse wires (Q) to the welding line, lying between rows of mutually adjustable welding electrodes (1, 2), of a grid welding machine operating according to the electric resistance method, in which the transverse wires (Q) are first brought into a feed position arranged at a distance from the welding line, and then to the welding electrodes (1, 2) in the region of which devices (11) for catching and holding the fed transverse wires (Q) on the welding line are provided between the welding electrodes (1, 2), characterized in that there is arranged, in this feed position, at least one nozzle (9), which can be impinged with compressed air in time with the welding cycle, is directed towards the welding line, and is for conveying the transverse wires (Q), exclusively by virtue of the compressed air, out of the feed position to the welding line, and in that there are provided parallel guides (5, 6; 15, 16), following said nozzle (9) in the direction of the welding line, ending at a distance ahead of the region of the welding electrodes (1, 2), and bounding either side of the transverse wire feed path.

2. Apparatus according to Claim 1, characterized in that, for conveying the transverse wires (Q), a slot nozzle, extending at least over a substantial part of the width of the welding machine, or a row of nozzles (9), arranged spaced apart, is provided.

3. Apparatus according to Claim 1 or 2, characterized in that the guides (5, 6; 15, 16) are arranged in planes inclined at an acute angle to the plane of the rows of welding electrodes.

4. Apparatus according to one of Claims 1 to 3, characterized in that nozzles (9) for the conveying of transverse wires (Q) and transverse wire guides (5, 6; 15, 16) are provided on both sides of the grid production plane.

5. Apparatus according to one of Claims 1 to 4, characterized in that the devices (11) for catching and holding the transverse wires (Q) are designed as permanent magnets or as electromagnets which can be excited in time with the welding cycle.

6. Apparatus according to one of Claims 1 to 5, characterized in that the devices (11) for catching and holding the transverse wires (Q) are secured on carriers (3, 4) for the electrodes (1, 2), distributed over the width of the machine.

## Revendications

1. Dispositif pour amener les fils d'acier transversaux (Q) à la ligne de soudage située entre des rangées d'electrodes de soudage (1, 2), réglables en position, d'une machine pour souder les treillis travaillant selon le procédé à résistance électrique, dans lequel les fils transversaux (Q) sont d'abord transférés à une position d'amenée située à distance de la ligne de soudage et ensuite aux électrodes de soudage (1, 2), dans la zone desquelles des appareillages (11) pour saisir et maintenir les fils transversaux délivrés (Q), sur la ligne de soudage, sont prévus entre les électrodes de soudage (1, 2), charactérisé par le fait que, dans cette position d'amenée, au moins une buse (9) dirigée vers la ligne de soudage, et actionnable par de l'air comprimé dans le cycle de soudage, est disposée pour déplacer les fils transversaux (Q), exclusivement en vertu de l'air comprimé, hors de la position d'amenée jusqu'à la ligne de soudage; et par le fait que, dans la continuité de cette buse (9), sont prévus des guides parallèles (5, 6; 15, 16) qui délimitent des deux côtés la voie d'amenée des fils transversaux, se terminent à distance devant la zone des électrodes de soudage (1, 2) et s'étendent en direction de la ligne de soudage.

2. Dispositif selon la revendication 1, caractérisé par le fait que, pour déplacer les fils transversaux (Q), est prévue une buse à fente s'étendant au moins sur une partie notable de la largeur de la machine de soudage, ou une rangée de buses (9) distantes entre elles.

3. Dispositif selon la revendication 1 ou 2, caractérisé par le fait que les guides (5, 6 ; 15, 16) sont disposés dans des plans inclinés formant un angle aigu avec le plan des rangées d'électrodes de soudage.

4. Dispositif selon l'une des revendications 1 à 3, caractérisé par le fait que, sur les deux côtés du plan de production de treillis, sont prévus des buses (9) pour le déplacement de fils transversaux (Q), ainsi que des guides (5, 6 ; 15, 16) de fils transversaux.

5. Dispositif selon l'une des revendications 1 à 4, caractérisé par le fait que les appareillages (11) pour saisir et maintenir les fils transversaux (Q) sont constitués d'aimants permanents, ou d'électro-aimants excitables dans le cycle de soudage.

6. Dispositif selon l'une des revendications 1 à 5, caractérisé par le fait que les appareillages (11) pour saisir et maintenir les fils transversaux (Q) sont fixés sur des supports (3, 4) prévus pour les électrodes (1, 2), et distribués sur la largeur de la machine.
